# FASCICULE DE BREVET EUROPEEN

(11) **EP 3 572 929 B1**
(45) Date de publication et mention de la délivrance du brevet: **13.01.2021**
(21) Numéro de dépôt: 19173562.0
(22) Date de dépôt: 09.05.2019
(51) Int. Cl.: G06F 5/06

(54) **PROCÉDÉ D`ENVOI DE DONNÉES, PROGRAMME D`ORDINATEUR ET SYSTÈME ASSOCIÉS**
DATENSENDEVERFAHREN, ENTSPRECHENDES COMPUTERPROGRAMM UND SYSTEM
METHOD FOR SENDING DATA, ASSOCIATED COMPUTER PROGRAM AND SYSTEM

(30) Priorité: 22.05.2018 FR 1854232
(43) Date de publication de la demande: 27.11.2019
(73) Titulaire: BULL SAS, 78340 Les Clayes Sous Bois (FR)
(72) Inventeur: LAGADEC, Pierre Axel, 06270 Villeneuve Loubet (FR); DERRADJI, Saïd, 92130 Issy les Moulineaux (FR); RIGAL, Dominique, 06200 Nice (FR); MARLIAC, Laurent, 06700 Saint Laurent du Var (FR)
(74) Mandataire: Bonnet, Michel

(56) Documents cités:
- SEITANIDIS IOANNIS ET AL: "ElastiStore: Flexible Elastic Buffering for Virtual-Channel-Based Networks on Chip", IEEE TRANSACTIONS ON VERY LARGE SCALE INTEGRATION (VLSI) SYSTEMS, IEEE SERVICE CENTER, PISCATAWAY, NJ, USA, vol. 23, no. 12, 1 décembre 2015 (2015-12-01), pages 3015-3028, XP011590954, ISSN: 1063-8210, DOI: 10.1109/TVLSI.2014.2383442 [extrait le 2015-11-20]
- H.T. KUNG ET AL: "The FCVC (flow-controlled virtual channels) proposal for ATM networks: a summary", NETWORK PROTOCOLS, 1993. PROCEEDINGS., 1993 INTERNATIONAL CONFERENCE O N SAN FRANCISCO, CA, USA 19-22 OCT. 1993, 1 janvier 1993 (1993-01-01), pages 116-127, XP055547247, DOI: 10.1109/ICNP.1993.340926 ISBN: 978-0-8186-3670-7
- YANG ZHANG ET AL: "Express Router Microarchitecture for Triplet-based Hierarchical Interconnection Network", HIGH PERFORMANCE COMPUTING AND COMMUNICATION&2012 IEEE 9TH INTERNATIONAL CONFERENCE ON EMBEDDED SOFTWARE AND SYSTEMS (HPCC-ICESS), 2012 IEEE 14TH INTERNATIONAL CONFERENCE ON, IEEE, 25 juin 2012 (2012-06-25), pages 295-302, XP032255283, DOI: 10.1109/HPCC.2012.47 ISBN: 978-1-4673-2164-8

## Description

La présente invention concerne un procédé d'envoi de données, ainsi qu'un programme d'ordinateur et un système associés.

L'invention s'applique plus particulièrement à un procédé d'envoi de données depuis un dispositif amont jusqu'à un dispositif aval, comportant :
- l'envoi d'une donnée d'un parmi une pluralité de canaux virtuels partageant une même mémoire tampon d'entrée du dispositif aval, si ce canal virtuel utilise un nombre d'emplacements mémoire de la mémoire tampon d'entrée strictement inférieur à un plafond en cours.

Par exemple, les dispositifs amont et aval appartiennent à un système comportant des nœuds et un réseau d'interconnexion des nœuds comportant des commutateurs et des liens de communication connectant les commutateurs entre eux et aux nœuds. Chacun des dispositifs amont et aval est alors soit un des nœuds soit un des commutateurs. Les commutateurs et les nœuds comportent des ports de connexion auxquels les liens de communication sont connectés.

Dans ce cadre, il est connu de fixer arbitrairement le plafond en cours, à une même valeur pour toutes les mémoires tampon d'entrée présentes dans le système. Cette valeur est choisie grande afin que chaque canal virtuel ait à sa disposition suffisamment d'emplacements mémoire pour que les données de ce canal virtuel soit envoyées de manière fluide.

Un problème de cette solution est qu'elle nécessite d'utiliser des mémoires tampon d'entrée de grande capacité.

Il peut ainsi être souhaité de prévoir un procédé d'envoi de données qui permette de s'affranchir d'au moins une partie des problèmes et contraintes précités.

L'invention a donc pour objet un procédé d'envoi de données depuis un dispositif amont jusqu'à un dispositif aval, comportant :
- l'envoi d'une donnée d'un parmi une pluralité de canaux virtuels partageant une même mémoire tampon d'entrée du dispositif aval, si ce canal virtuel utilise un nombre d'emplacements mémoire de la mémoire tampon d'entrée strictement inférieur à un plafond en cours.
caractérisé en ce qu'il comporte en outre :
- la mesure d'une latence de communication entre les dispositifs amont et aval,
- le calcul du plafond en cours à partir de la latence.

En effet, la longueur des liens de communication n'est pas uniforme entre les nœuds du système. Grâce à l'invention, il est possible de calculer un plafond différent pour chaque paire de dispositifs amont et aval. Le plafond est toujours calculé au plus juste suivant la latence de communication qui dépend de la longueur réelle du lien de communication, ce qui permet de n'utiliser par canal virtuel que la quantité de mémoire nécessaire tout en conservant de bonnes performances.

De façon optionnelle, la mesure de la latence comporte la mesure d'un temps pris par un échange de messages entre les dispositifs amont et aval.

De façon optionnelle également, le procédé comporte en outre :
- la détermination d'un taux d'utilisation de la mémoire tampon d'entrée, et le plafond en cours est calculé à partir de la latence et du taux d'utilisation.

De façon optionnelle également, le calcul du plafond en cours comporte :
- le calcul de plusieurs plafonds possibles à partir de la latence,
- la sélection, en tant que plafond en cours, d'un des plafonds possibles à partir du taux d'utilisation.

De façon optionnelle également, les plafonds possibles sont respectivement associés à des intervalles adjacents de taux d'utilisation, et le plafond possible sélectionné est celui dans lequel se trouve le taux d'utilisation déterminé.

De façon optionnelle également, un intervalle inférieur et un intervalle supérieur adjacents sont délimités l'un de l'autre par un seuil prenant une valeur haute lorsque le plafond possible sélectionné est celui associé à l'intervalle inférieur et une valeur basse, inférieure à la valeur haute, lorsque le plafond possible sélectionné est celui associé à l'intervalle supérieur.

De façon optionnelle également, le procédé comporte en outre :
- le calcul, à partir de la latence, d'un nombre réservé d'emplacements mémoire pour chaque canal virtuel,
   et la donnée est envoyée si le canal virtuel utilise un nombre d'emplacements mémoire strictement inférieur au plafond et si la mémoire tampon d'entrée présente plus d'emplacements mémoire libres que d'emplacements réservés libres pour tous les canaux virtuels.

De façon optionnelle également, les dispositifs amont et aval appartiennent à un système comportant :
- des nœuds,
- un réseau d'interconnexion des nœuds comportant des commutateurs et des liens de communication connectant les commutateurs entre eux et aux nœuds,
   chacun des dispositifs amont et aval étant soit un des nœuds soit un des commutateurs.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ordinateur.

L'invention a également pour objet un système d'envoi de données comportant :
- un dispositif aval comportant une mémoire tampon d'entrée,
- un dispositif amont conçu pour envoyer une donnée d'un parmi une pluralité de canaux virtuels partageant la mémoire tampon d'entrée, si ce canal virtuel utilise un nombre d'emplacements mémoire de la mémoire tampon d'entrée strictement inférieur à un plafond en cours,
- des moyens de mesure d'une latence de communication entre les dispositifs amont et aval,
- des moyens de calcul du plafond en cours à partir de la latence.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système, selon un mode de réalisation de l'invention,
- la figure 2 représente schématiquement la structure générale d'un dispositif amont et d'un dispositif aval du système de la figure 1,
- la figure 3 illustre les étapes successives d'un procédé d'envoi de données du dispositif amont au dispositif aval de la figure 2, selon un mode de réalisation de l'invention.

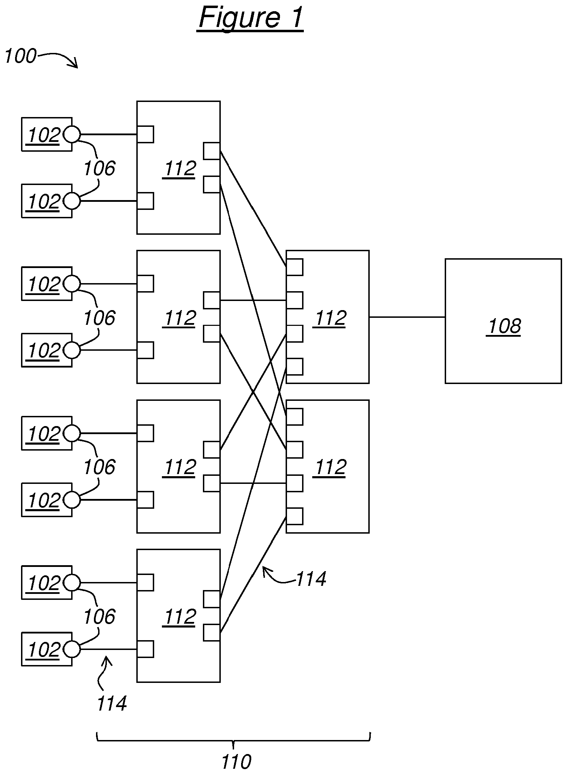

En référence à la figure 1, un système 100 mettant en œuvre l'invention va à présent être décrit.

Le système 100 regroupe des dispositifs informatiques 102 indépendants apparaissant de l'extérieur comme un ordinateur unique à très forte puissance de calcul, dit calculateur à haute performance de traitement ou supercalculateur ou encore calculateur HPC (de l'anglais « High Performance Computing »).

Chaque dispositif informatique 102 comporte au moins une interface réseau. Chaque dispositif informatique 102 peut en outre comporter une unité de traitement centrale (« central processing unit » en anglais), une mémoire principale (« main memory » en anglais) dans laquelle des instructions pour l'unité de traitement centrale sont destinées à être enregistrées (un tel dispositif informatique 102 est alors dit de calcul) et/ou un dispositif de stockage de données (un tel dispositif informatique est alors dit d'entrée/sortie (ou d'IO, de l'anglais « Input Output »)), tel qu'une mémoire de mase comme un ou plusieurs disques durs, pour l'enregistrement et/ou lé récupération de données par exemple utilisées et/ou produites par les dispositifs informatiques de calcul.

Les interfaces réseau forment respectivement des nœuds 106 du système 100. Plusieurs interfaces réseau (et donc plusieurs nœuds 106) peuvent appartenir à un même dispositif informatique 102, ou bien, comme dans l'exemple décrit, chaque dispositif informatique 102 peut ne comporter qu'une seule interface réseau formant un des nœuds 106. Un nœud 106 formé par une interface réseau d'un dispositif informatique 102 de calcul est appelé « nœud de calcul », tandis qu'un nœud 106 formé d'une interface réseau d'un dispositif informatique 102 d'entrée/sortie est appelé « nœud d'entrée/sortie ».

Le système 100 comporte en outre un serveur d'administration 108. Le serveur d'administration 108 est en particulier conçu pour dialoguer avec des clients souhaitant utiliser le système 100, ce dernier étant alors vue par les clients comme un ordinateur unique. Le serveur d'administration 108 est en outre conçu pour ordonnancer, entre les dispositifs informatiques de calcul, des tâches reçues des clients.

Un tel système 100 permet la répartition de traitements complexes et/ou de calculs parallèles sur au moins une partie des dispositifs informatiques de calcul.

Le système 100 comporte en outre un réseau 110 d'interconnexion des nœuds 106.

Le réseau 110 comporte des commutateurs 112 et des liens de communication 114 connectant les commutateurs 112 entre eux et aux nœuds 106. Chaque commutateur 112 et chaque nœud 106 présente plusieurs ports de connexion (représentés par des petits carrés sur la figure 1 pour les commutateurs 112) et chaque lien de communication 114 est connecté entre un port de connexion d'un commutateur 112 et soit un port de connexion d'un autre commutateur 112 soit un port de connexion d'un nœud 106.

Le système 100 présente une certaine topologie définissant l'agencement relatif des nœuds 106, des commutateurs 112 et des liens de communication 114. Dans l'exemple décrit, la topologie est celle d'un arbre imposant parallèle généralisé (« Parallel Generalized Fat Tree » ou PGFT en anglais).

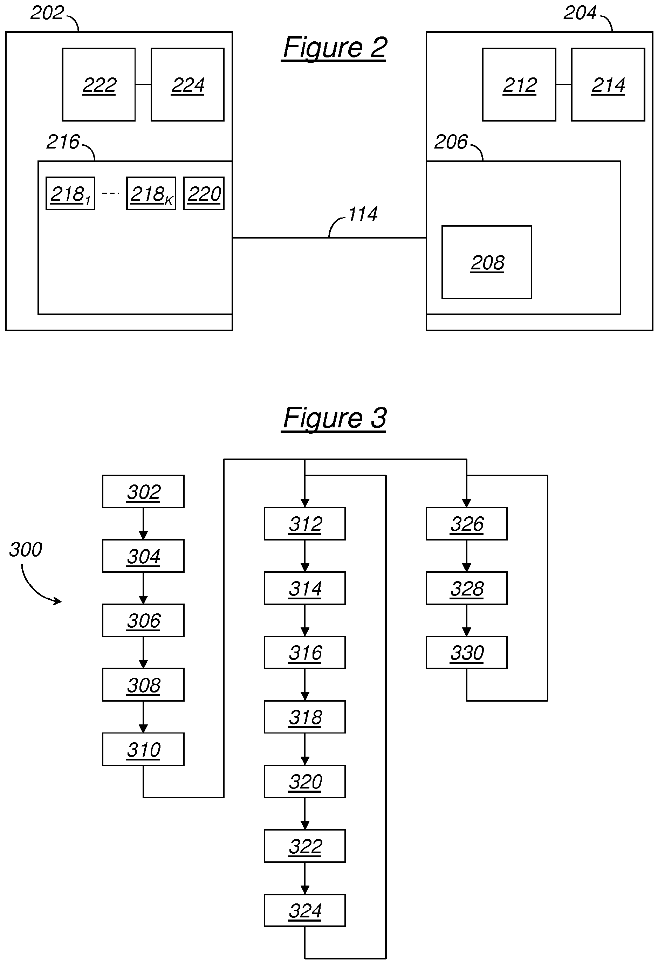

En référence à la figure 2, un dispositif amont 202, un dispositif aval 204 et un lien de communication 114 les connectant, va à présent être décrit. Dans l'exemple décrit, les dispositifs amont 202 et aval 204 sont deux des commutateurs 112 de la figure 1. Alternativement, l'un des dispositifs amont 202 et aval 204 pourrait être un des nœuds 106.

Dans l'exemple décrit, les ports et les liens de communication 114 sont bidirectionnels. Ainsi, chaque commutateur 112 et chaque nœud 106 est à la fois un dispositif aval et un dispositif amont. Ainsi, chacun de ses ports est à la fois un port d'entrée et un port de sortie, de sorte qu'il comporte tous les éléments qui vont être décrits à la fois du port de sortie du dispositif amont 202 et du port d'entrée du dispositif aval 204.

Le dispositif aval 204 comporte un port d'entrée 206 auquel le lien de communication 114 est connecté pour la réception de données. Le port d'entrée 206 supporte un nombre prédéterminé K de canaux virtuels et un débit D de par exemple 25 Go/s. Le port d'entrée 206 comporte une mémoire tampon d'entrée 208 présentant un certain nombre d'emplacements mémoire destinés chacun à recevoir une unité de données, ce nombre étant appelé la capacité C de la mémoire tampon d'entrée 208. Dans l'exemple décrit, l'unité de données est une unité de contrôle de flux ou FLIT (de l'anglais « FLow control unIT ») qui est composée de 32 octets. La capacité C de la mémoire tampon d'entrée 208 est par exemple de 4096 FLITs.

Le dispositif aval 204 comporte en outre une unité de traitement 212, telle qu'un microprocesseur, et une mémoire 214 opérationnellement couplée à l'unité de traitement 212 et comportant un programme d'ordinateur comprenant des instructions pour l'unité de traitement 212.

Le dispositif amont 202 comporte un port de sortie 216 auquel le lien de communication 114 est connecté. Le port de sortie 216 supporte le même nombre prédéterminé K de canaux virtuels et le même débit D que le port d'entrée 206. Il comporte des compteurs de crédits 218₁...218_{K} pour respectivement les K canaux virtuels, ainsi qu'un compteur d'utilisation 220 de la mémoire tampon d'entrée 208 destiné à compter les emplacements mémoire utilisés par l'ensemble des canaux virtuels. Ainsi, la mémoire tampon d'entrée 208 présente un taux d'utilisation TU égal au rapport entre la valeur du compteur d'utilisation 220 et la capacité C de la mémoire tampon d'entrée 208.

Le dispositif amont 202 comporte en outre une unité de traitement 222, telle qu'un microprocesseur, et une mémoire 224 opérationnellement couplée à l'unité de traitement 222 et comportant un programme d'ordinateur comprenant des instructions pour l'unité de traitement 222.

Ainsi, dans l'exemple décrit, les dispositifs amont 202 et aval 204 comportent des moyens logiciels, sous la forme de programme d'ordinateur téléchargeable depuis un réseau de communication et/ou enregistré sur un support lisible par ordinateur et/ou exécutable par un processeur, comprenant des instructions pour l'exécution des étapes du procédé qui sera décrit plus loin lorsque ledit programme d'ordinateur est exécuté sur les dispositifs amont 202 et aval 204. Alternativement, tout ou partie de ces moyens pourraient être des moyens matériels micro programmés ou micro câblés dans des circuits intégrés dédiés. Ainsi, en variante, les dispositifs amont 202 et aval 204 pourraient chacun être un dispositif électronique composé uniquement de circuits numériques (sans programme d'ordinateur) pour la réalisation des mêmes actions.

Par ailleurs, la capacité C de la mémoire tampon d'entrée 208 et le débit D sont enregistrés dans la mémoire 224 pour permettre leur utilisation dans les calculs qui seront décrits plus loin.

En référence à la figure 3, un procédé 300 d'envoi de données depuis le dispositif amont 202 jusqu'au dispositif aval 204 va à présent être décrit.

Au cours d'une étape 302, le dispositif amont 202 mesure une latence (notée L par la suite) de communication entre les dispositifs amont 202 et aval 204.

Dans l'exemple décrit, lors de son démarrage, le système 100 met en œuvre une phase d'initialisation au cours de laquelle les commutateurs 112 échangent entre eux et avec les nœuds 106 des messages d'initialisation. Ces échanges sont mis à profit pour déterminer la latence L, en mesurant un temps pris par un échange de messages entre les dispositifs amont 202 et aval 204 lors de la phase d'initialisation. Plus précisément, le dispositif amont 202 envoie un premier message d'initialisation à destination du dispositif aval 204, via le lien de communication 114. Le dispositif aval 204 reçoit le premier message d'initialisation et, en réponse, envoi un deuxième message d'initialisation à destination du dispositif amont 202, toujours via le lien de communication 114. Le dispositif amont 202 reçoit alors ce deuxième message d'initialisation. Cette réception est séparée de l'envoi du premier message d'initialisation par un certain temps, que le dispositif amont 202 mesure. Dans l'exemple décrit, la latence L correspond à ce temps mesuré.

Au cours d'une étape 304, le dispositif amont 202 calcule, pour chacun d'une pluralité d'intervalles adjacents de taux d'utilisation TU de la mémoire tampon d'entrée 208, un plafond possible à partir de la latence L. Comme cela sera décrit par la suite, chacun de ces plafonds possibles est destiné à être sélectionné pour former un plafond en cours P représentant un nombre maximum d'emplacements mémoire pouvant être utilisé par chaque canal virtuel.

Par exemple, chacun de ces plafonds possibles est calculé à partir de la latence L et du débit D du port de sortie auquel le lien de communication 114 est connecté.

De préférence encore, chaque plafond possible a une valeur minimale égale à la capacité C de la mémoire tampon d'entrée 208 divisée par le nombre de canaux virtuels K. Par exemple, avec la capacité C égale à 4096 emplacements mémoire et le nombre de canaux virtuels K égal à 20, la valeur minimale des plafonds possibles est de 205 emplacements mémoire.

De préférence encore, les plafonds possibles sont décroissants d'un intervalle au suivant, dans le sens croissant du taux d'utilisation.

Dans l'exemple décrit, deux intervalles sont utilisés. Le premier intervalle correspond à un taux d'utilisation TU inférieur ou égal à 75% et le deuxième intervalle correspond à un taux d'utilisation TU strictement supérieur à 75%. Le premier intervalle est associé à un premier plafond possible P1 donné dans l'exemple décrit par la formule : P1 = max (L x D ; C/K), où L est la latence, D est le débit (en nombre de FLITs), C est la capacité de la mémoire tampon d'entrée 208 et K est le nombre de canaux virtuels. Par exemple, si la latence L mesurée vaut 400 ns et si le débit (en octets) vaut 25 Go/s (soit 0,78125 x10⁹ FLITs/s), le premier plafond possible P1 vaut 313. Le deuxième intervalle est associé à un deuxième plafond possible (noté P2) donné dans l'exemple décrit par la formule : P2 = max (50% x L x D ; C/K), où L est la latence, D est le débit (en nombre de FLITs), C est la capacité de la mémoire tampon d'entrée 208 et K est le nombre de canaux virtuels. Par exemple, si la latence L mesurée vaut 400 ns et si le débit (en octets) vaut 25 Go/s (soit 0,78125 x10⁹ FLITs/s), 50% x L x D vaut 157, de sorte que le deuxième plafond possible P2 prend la valeur minimale de 205.

Il sera apprécié que deux intervalles adjacents, l'un (appelé intervalle inférieur) étant situé sous l'autre (appelé intervalle supérieur) dans le sens croissant du taux d'utilisation TU, sont délimités l'un de l'autre par un seuil. Dans l'exemple décrit, le seuil séparant les deux intervalles vaut 75% et est fixe. Cependant, dans d'autres modes de réalisation, le seuil pourrait varier selon un phénomène d'hystérésis. Plus précisément, lorsque le plafond possible sélectionné est celui associé à l'intervalle inférieur, le seuil prend une valeur haute tandis que lorsque le plafond possible sélectionné est celui associé à l'intervalle supérieur, le seuil prend une valeur basse, inférieure à la valeur haute. Par exemple, lorsque le plafond possible P1 est sélectionné, le seuil pour passer au deuxième intervalle vaut 80%, tandis que lorsque le plafond possible P2 est sélectionné, le seuil pour passer à l'intervalle inférieur vaut 70%. Ce phénomène d'hystérésis évite des changements fréquents du plafond en cours P lorsque le taux d'occupation TU fluctue autour du seuil.

Au cours d'une étape 306, le dispositif amont 202 calcule un nombre d'emplacements mémoire réservés par canal virtuel (ce nombre étant noté N_{R}) à partir de la latence L. Dans l'exemple décrit, la formule suivante est utilisée : N_{R} = 10% x L x D, où L est la latence et D est le débit (en nombre de FLITs).

Au cours d'une étape 308, le dispositif amont 202 sélectionne le premier plafond possible P1 en tant que plafond en cours P. Dans l'exemple décrit, cette étape est réalisée en initialisant chaque compteur de crédit 218₁...218_{K} au premier nombre P1.

Au cours d'une étape 310, le dispositif amont 202 initialise le compteur d'utilisation 220 à zéro.

Par la suite, la première boucle d'étapes suivante est mise en œuvre à chaque fois que le dispositif amont 202 cherche à envoyer un FLIT, dont le canal virtuel est noté k1, au dispositif aval 204 via le lien de communication 114.

Au cours d'une étape 312, le dispositif amont 202 détermine le taux d'utilisation TU de la mémoire tampon d'entrée 208, par exemple à partir de la capacité C de la mémoire tampon d'entrée 208 et du compteur d'utilisation 220.

Au cours d'une étape 314, le dispositif amont 202 sélectionne, en tant que plafond en cours P, le nombre associé à l'intervalle dans lequel se trouve le taux d'utilisation TU déterminé.

Au cours d'une étape 316, si le plafond P a changé suite à l'étape 314, le dispositif amont 202 calcule la différence entre l'ancien plafond P et le nouveau plafond P et applique cette différence à chaque compteur de crédits 218₁...218_{K}.

Par exemple, si le plafond en cours P était, avant l'étape 314, le plafond possible P2 et si le plafond en cours P est, à l'issue de l'étape 314, le plafond possible P1, alors la différence vaut P1 - P2, soit 313 - 205 = 108 en reprenant l'exemple développé précédemment. Ainsi, 108 crédits sont ajoutés à chaque compteur de crédits 218₁...218_{K}.

À l'inverse, si le plafond en cours P était, avant l'étape 314, le plafond possible P1 et si le plafond en cours P est, à l'issue de l'étape 314, le plafond possible P2, alors la différence vaut P2 - P, soit -108 en reprenant l'exemple développé précédemment. Ainsi, 108 crédits sont retranchés à chaque compteur de crédits 218₁...218_{K}. Cela peut amener un compteur de crédit à une valeur négative. Cela signifie que le canal virtuel correspondant dépasse le plafond en cours P et utilise donc trop d'emplacements mémoire dans la mémoire tampon d'entrée 208.

Au cours d'une étape 318, le dispositif amont 202 vérifie que le canal virtuel du FLIT considéré utilise un nombre d'emplacements mémoire strictement inférieur au plafond en cours P.

Dans l'exemple décrit, cette étape est mise en œuvre en vérifiant que le compteur de crédits 218ₖ correspondant est strictement supérieur à zéro.

Au cours d'une étape 320, le dispositif amont 202 vérifie que la mémoire tampon d'entrée 208 présente plus d'emplacements mémoire libres que d'emplacements réservés libres pour tous les canaux virtuels.

Dans l'exemple décrit, cette étape est mise en œuvre en calculant, pour chaque canal virtuel, le nombre d'emplacements mémoire utilisés par ce canal virtuel (ce nombre étant note N(k), où k est le canal virtuel), par exemple en utilisant la formule : N_{U}(k) = P - C(k), où C(k) est la valeur du compteur de crédits 218ₖ. Ensuite, le nombre d'emplacements réservés libres de ce canal virtuel (noté N_{RL}(k)) est calculé en retranchant le nombre d'emplacements mémoire utilisés par ce canal virtuel au nombre d'emplacements mémoire réservés N_{R} et en limitant le résultat à zéro. Par exemple, la formule suivante : N_{RL}(k) = max (N_{R} - N_{U}(k) ; 0) est utilisée. Le nombre d'emplacements réservés libres total (c'est-à-dire pour tous les canaux virtuels), noté N_{RL}, est alors calculé en additionnant, sur tous les canaux virtuels, le nombre d'emplacements réservés libres de chaque canal virtuel. Par exemple, la formule suivante: N_{RL} = ∑ₖN_{RL}(k) est utilisée. Le nombre d'emplacements mémoire libres dans la mémoire tampon d'entrée 208 est par exemple donné par la formule suivante : N_{L} = C - E_{U}, où E_{U} est le nombre d'emplacements mémoire utilisés, donné par le compteur d'utilisation 220. Le nombre d'emplacements réservés libres total est alors comparé au nombre d'emplacements mémoire libres dans la mémoire tampon d'entrée 208.

Au cours d'une étape 322, si le canal virtuel k1 utilise un nombre d'emplacements mémoire strictement inférieur au plafond en cours P et si la mémoire tampon d'entrée 208 présente plus d'emplacements mémoire libres que d'emplacements réservés libres pour tous les canaux virtuels, le dispositif amont 202 envoie le FLIT F1, décrémente le compteur de crédit Cₖ et incrémente le compteur d'utilisation 220. Dans le cas contraire, il n'envoie pas le FLIT F1 et retourne à l'étape 312 pour un autre FLIT.

Au cours d'une étape 324, le dispositif aval 204 reçoit le FLIT F1 et l'enregistre dans sa mémoire tampon d'entrée 208.

Parallèlement, la deuxième boucle d'étapes suivante est mise en œuvre à chaque fois que le dispositif aval 204 retire de sa mémoire tampon d'entrée 208 un FLIT F2 (dont le canal virtuel est noté k2), par exemple pour l'envoyer à un autre dispositif.

Au cours d'une étape 326, le dispositif aval 204 retire le FLIT F2 de sa mémoire tampon d'entrée 208.

Au cours d'une étape 328, le dispositif aval 204 envoie un crédit pour le canal virtuel k2 au dispositif amont 202, via le lien de communication 114.

Au cours d'une étape 330, le dispositif amont 202 reçoit le crédit pour le canal virtuel k2, incrémente le compteur de crédits 218ₖ₂ correspondant à ce canal virtuel k2 et décrémente le compteur d'utilisation 220.

Il sera apprécié que, dans d'autres modes de réalisation, le plafond en cours pourrait être différent d'un canal virtuel à l'autre. Par exemple, le plafond en cours de chaque canal virtuel pourrait être calculé à partir en outre d'un historique d'utilisation de ce canal virtuel, afin de diminuer le plafond pour les canaux virtuels peu utilisés dans le passé et au contraire de l'augmenter pour les canaux virtuels fortement utilisés.

Il apparaît clairement qu'un procédé tel que celui décrit précédemment permet de diminuer la quantité de mémoire tampon d'entrée tout en conservant de bonnes performances.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé (300) d'envoi de données depuis un dispositif amont (202) jusqu'à un dispositif aval (204), comportant :
- l'envoi (320) d'une donnée d'un parmi une pluralité de canaux virtuels partageant une même mémoire tampon d'entrée (208) du dispositif aval (204), si ce canal virtuel utilise un nombre d'emplacements mémoire de la mémoire tampon d'entrée (208) strictement inférieur à un plafond en cours,
**caractérisé en ce qu'**il comporte en outre :
- la mesure (302) d'une latence de communication entre les dispositifs amont (202) et aval (204),
- le calcul (304, 308) du plafond en cours à partir de la latence.

2. Procédé (300) selon la revendication 1, dans lequel la mesure (302) de la latence comporte la mesure d'un temps pris par un échange de messages entre les dispositifs amont (202) et aval (204).

3. Procédé (300) selon la revendication 1 ou 2, comportant en outre :
- la détermination d'un taux d'utilisation de la mémoire tampon d'entrée (208),
et dans lequel le plafond en cours est calculé à partir de la latence et du taux d'utilisation.

4. Procédé (300) selon la revendication 3, dans lequel le calcul du plafond en cours comporte :
- le calcul (304) de plusieurs plafonds possibles à partir de la latence,
- la sélection (308), en tant que plafond en cours, d'un des plafonds possibles à partir du taux d'utilisation.

5. Procédé (300) selon la revendication 4, dans lequel les plafonds possibles sont respectivement associés à des intervalles adjacents de taux d'utilisation, et dans lequel le plafond possible sélectionné est celui dans lequel se trouve le taux d'utilisation déterminé.

6. Procédé (300) selon la revendication 5, dans lequel un intervalle inférieur et un intervalle supérieur adjacents sont délimités l'un de l'autre par un seuil prenant une valeur haute lorsque le plafond possible sélectionné est celui associé à l'intervalle inférieur et une valeur basse, inférieure à la valeur haute, lorsque le plafond possible sélectionné est celui associé à l'intervalle supérieur.

7. Procédé (300) selon l'une quelconque des revendications 1 à 6, comportant en outre :
- le calcul (306), à partir de la latence, d'un nombre réservé d'emplacements mémoire pour chaque canal virtuel,
et dans lequel la donnée est envoyée si le canal virtuel utilise un nombre d'emplacements mémoire strictement inférieur au plafond et si la mémoire tampon d'entrée (208) présente plus d'emplacements mémoire libres que d'emplacements réservés libres pour tous les canaux virtuels.

8. Procédé (300) selon l'une quelconque des revendications 1 à 7, dans lequel les dispositifs amont (202) et aval (204) appartiennent à un système (100) comportant :
- des nœuds (106),
- un réseau (110) d'interconnexion des nœuds (106) comportant des commutateurs (112) et des liens de communication (114) connectant les commutateurs (112) entre eux et aux nœuds (106),
chacun des dispositifs amont (202) et aval (204) étant soit un des nœuds (106) soit un des commutateurs (112).

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé (300) selon l'une quelconque des revendications 1 à 8, lorsque ledit programme est exécuté sur un ordinateur.

10. Système d'envoi de données comportant :
- un dispositif aval (204) comportant une mémoire tampon d'entrée (208),
- un dispositif amont (202) conçu pour envoyer une donnée d'un parmi une pluralité de canaux virtuels partageant la mémoire tampon d'entrée (208), si ce canal virtuel utilise un nombre d'emplacements mémoire de la mémoire tampon d'entrée (208) strictement inférieur à un plafond en cours,
- des moyens de mesure d'une latence de communication entre les dispositifs amont (202) et aval (204),
- des moyens de calcul du plafond en cours à partir de la latence.

## Patentansprüche

1. Verfahren (300) zum Senden von Daten von einer stromaufwärtigen Vorrichtung (202) bis zu einer stromabwärtigen Vorrichtung (204), umfassend:
- Senden (320) eines Datenelements von einem von mehreren virtuellen Kanälen, die denselben Eingangspufferspeicher (208) der stromabwärtigen Vorrichtung (204) gemeinsam nutzen, wenn dieser virtuelle Kanal eine Anzahl von Speicherplätzen des Eingangspufferspeichers (208) verwendet, die strikt kleiner als eine laufende Obergrenze ist,
**dadurch gekennzeichnet, dass** es weiterhin umfasst:
- Messen (302) einer Latenz der Kommunikation zwischen der stromaufwärtigen Vorrichtung (202) und der stromabwärtigen Vorrichtung (204),
- Berechnen (304, 308) der laufenden Obergrenze aus der Latenz.

2. Verfahren (300) nach Anspruch 1, wobei das Messen (302) der Latenz das Messen einer Zeit, die ein Austausch von Nachrichten zwischen der stromaufwärtigen Vorrichtung (202) und der stromabwärtigen Vorrichtung (204) in Anspruch nimmt.

3. Verfahren (300) nach Anspruch 1 oder 2, weiterhin umfassend:
- Bestimmen eines Nutzungsgrads des Eingangspufferspeichers (208),
und wobei die laufende Obergrenze aus der Latenz und dem Nutzungsgrad berechnet wird.

4. Verfahren (300) nach Anspruch 3, wobei das Berechnen der laufenden Obergrenze umfasst:
- Berechnen (304) von mehreren möglichen Obergrenzen aus der Latenz,
- Auswählen (308) einer möglichen Obergrenze aus dem Nutzungsgrad als laufende Obergrenze.

5. Verfahren (300) nach Anspruch 4, wobei die möglichen Obergrenzen jeweils mit benachbarten Intervallen des Nutzungsgrads assoziiert sind und wobei die ausgewählte mögliche Obergrenze diejenige ist, in der sich der bestimmte Nutzungsgrad befindet.

6. Verfahren (300) nach Anspruch 5, wobei ein unteres Intervall und ein oberes Intervall, die benachbart sind, durch einen Schwellenwert voneinander abgegrenzt sind, der einen hohen Wert annimmt, wenn die ausgewählte mögliche Obergrenze diejenige ist, die mit dem unteren Intervall assoziiert ist, und einen niedrigen Wert annimmt, der niedriger als der hohe Wert ist, wenn die ausgewählte mögliche Obergrenze diejenige ist, die mit dem oberen Intervall assoziiert ist.

7. Verfahren (300) nach einem der Ansprüche 1 bis 6, weiterhin umfassend:
- Berechnen (306) einer reservierten Anzahl von Speicherplätzen für jeden virtuellen Kanal aus der Latenz,
und wobei das Datenelement gesendet wird, wenn der virtuelle Kanal eine Anzahl von Speicherplätzen nutzt, die strikt kleiner als die Obergrenze ist, und wenn der Eingangspufferspeicher (208) mehr freie Speicherplätze aufweist als freie reservierte Plätze für all die virtuellen Kanäle.

8. Verfahren (300) nach einem der Ansprüche 1 bis 7, wobei die stromaufwärtige Vorrichtung (202) und die stromabwärtige Vorrichtung (204) zu einem System (100) gehören, umfassend:
- Knoten (106),
- ein Netzwerk (110) zur Verbindung der Knoten (106), umfassend Schalter (112) und Kommunikationsverknüpfungen (114), die die Schalter (112) miteinander und mit den Knoten (106) verbinden,
wobei jede von der stromaufwärtigen Vorrichtung (202) und der stromabwärtigen Vorrichtung (204) entweder einer der Knoten (106) oder einer der Schalter (112) ist.

9. Computerprogramm, das von einem Kommunikationsnetzwerk herunterladbar ist und/oder auf einem computerlesbaren Träger gespeichert ist und/oder durch einen Prozessor ausführbar ist, **dadurch gekennzeichnet, dass** es Anweisungen zur Ausführung von Schritten eines Verfahrens (300) nach einem der Ansprüche 1 bis 8, wenn das Programm von einem Computer ausgeführt wird, umfasst.

10. System zum Senden von Daten, umfassend:
- eine stromabwärtige Vorrichtung (204), umfassend einen Eingangspufferspeicher (208),
- einer stromaufwärtige Vorrichtung (202), die zum Senden eines Datenelements von einem von mehreren virtuellen Kanälen, die den Eingangspufferspeicher (208) gemeinsam nutzen, wenn dieser virtuelle Kanal eine Anzahl von Speicherplätzen des Eingangspufferspeichers (208) verwendet, die strikt kleiner als eine laufende Obergrenze ist, entworfen ist,
- Mittel zum Messen einer Latenz der Kommunikation zwischen der stromaufwärtigen Vorrichtung (202) und der stromabwärtigen Vorrichtung (204),
- Mittel zum Berechnen der laufenden Obergrenze aus der Latenz.

## Claims

1. A method (300) for sending data from an upstream device (202) to a downstream device (204), comprising:
- the sending (320) of a piece of data from one among a plurality of virtual channels sharing the same input buffer memory (208) of the downstream device (204), if this virtual channel uses a number of memory locations of the input buffer memory (208) strictly less than a current ceiling,
**characterized in that** it further comprises:
- the measuring (302) of a communication latency between the upstream (202) and downstream (204) devices,
- the calculating (304, 308) of the current ceiling from the latency.

2. The method (300) according to claim 1, wherein the measuring (302) of the latency comprises the measuring of a time taken by an exchange of messages between the upstream (202) and downstream (204) devices.

3. The method (300) according to claim 1 or 2, further comprising:
- the determining of a utilization rate of the input buffer memory (208), and wherein the current ceiling is calculated from the latency and from the utilization rate.

4. The method (300) according to claim 3, wherein the calculating of the current ceiling comprises:
- the calculating (304) of several possible ceilings from the latency,
- the selecting (308), as the current ceiling, of one of the possible ceilings from the utilization rate.

5. The method (300) according to claim 4, wherein the possible ceilings are respectively associated with adjacent intervals of utilization rates, and wherein the possible ceiling selected is the one in which the determined utilization rate is located.

6. The method (300) according to claim 5, wherein a lower interval and an upper interval which are adjacent are delimited from one another by a threshold taking a high value when the possible ceiling selected is the one associated with the lower interval and a low value, less than the high value, when the possible ceiling selected is the one associated with the upper interval.

7. The method (300) according to any of claims 1 to 6, further comprising:
- the calculating (306), from the latency, of a reserved number of memory locations for each virtual channel,
and wherein the piece of data is sent if the virtual channel uses a number of memory locations strictly less than the ceiling and if the input buffer memory (208) has more free memory locations than free reserved locations for all of the virtual channels.

8. The method (300) according to any of claims 1 to 7, wherein the upstream (202) and downstream (204) devices belong to a system (100) comprising:
- nodes (106),
- an interconnection network (110) for the nodes (106) comprising switches (112) and communication links (114) that connect the switches (112) together and to the nodes (106),
each of the upstream (202) and downstream (204) devices being either one of the nodes (106) or one of the switches (112).

9. A computer program that can be downloaded from a communication network and/or recorded on a medium that can be read by a computer and/or that can be executed by a processor, **characterized in that** it comprises instructions for the execution of steps of a method (300) according to any of claims 1 to 8, when said program is executed on a computer.

10. A system for sending data comprising:
- a downstream device (204) comprising an input buffer memory (208),
- an upstream device (202) designed to send a piece of data from one among a plurality of virtual channels sharing the input buffer memory (208), if this virtual channel uses a number of memory locations of the input buffer memory (208) strictly less than a current ceiling,
- means for measuring a communication latency between the upstream (202) and downstream (204) devices,
- means for calculating the current ceiling from the latency.
